(19) Europäisches Patentamt / European Patent Office / Office européen des brevets

(11) EP 2 646 589 B1

(12) EUROPEAN PATENT SPECIFICATION

(45) Date of publication and mention
of the grant of the patent:
**08.01.2020 Bulletin 2020/02**

(51) Int Cl.:
*C22C 37/00* [(2006.01)]     *C22C 37/06* [(2006.01)]
*C22C 37/10* [(2006.01)]     *C22C 33/08* [(2006.01)]

(21) Application number: **11845422.2**

(22) Date of filing: **29.11.2011**

(86) International application number:
**PCT/SE2011/051441**

(87) International publication number:
**WO 2012/074470 (07.06.2012 Gazette 2012/23)**

(54) **GREY IRON ALLOY AND BRAKE DISC CONTAINING GREY IRON ALLOY**

GRAUGUSSLEGIERUNG UND BREMSSCHEIBE MIT DER GRAUGUSSLEGIERUNG

ALLIAGE DE FONTE GRISE ET DISQUE DE FREIN CONTENANT L'ALLIAGE DE FONTE GRISE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2010 SE 1051276**

(43) Date of publication of application:
**09.10.2013 Bulletin 2013/41**

(73) Proprietor: **Scania CV AB
151 87 Södertälje (SE)**

(72) Inventors:
 • **SKOGLUND, Peter**
 **S-141 38 Huddinge (SE)**
 • **ERHAV, Dan**
 **S-181 39 Lidingö (SE)**
 • **STENFORS, Sven-Eric**
 **S-122 37 Enskede (SE)**
 • **TAMMINEN, Jarmo**
 **S-172 76 Sundbyberg (SE)**
 • **WILBERFORS, Fredrik**
 **S-147 71 Grödinge (SE)**
 • **THIBBLIN, Anders**
 **S-146 50 Tullinge (SE)**
 • **HAMMERSTRÖM, Lars**
 **S-178 41 Ekerö (SE)**

(74) Representative: **Scania CV AB
Patents, GP 117kv
151 87 Södertälje (SE)**

(56) References cited:
EP-A1- 1 646 732     WO-A1-03/095692
WO-A1-2010/079146     WO-A1-2010/079146
CN-A- 101 117 923     CN-A- 101 418 413
JP-A- S6 428 342     JP-A- 2001 123 240
RU-C1- 2 017 854     SU-A1- 1 293 241
SU-A1- 1 803 461     US-A- 5 894 010
US-A1- 2008 206 584

**Description**

TECHNICAL FIELD

The present invention relates to a grey iron alloy according to the preamble of claim 1. The invention relates also to a brake disc which contains the grey iron alloy according to the invention.

BACKGROUND

Grey iron is a type of cast iron whose structure consists of graphite flakes, so-called lamellar graphite, in for example a perlitic matrix. This structure gives the grey iron good characteristics with regard to vibration absorption and heat conduction, making it a suitable material for brake discs.

Brake discs are subject to substantial loads when the vehicle's kinetic energy is converted to heat in them during braking. Repeated braking operations may over time lead to crack formation in the discs, which are also subject to wear. The mechanism which controls crack formation is so-called thermomechanical fatigue. The repeated warmings and coolings of the discs during braking lead to stresses which plastically deform them and ultimately lead to cracks in them.

A known way of improving the high-temperature characteristics of brake discs and hence their resistance to thermal fatigue is to add various alloy elements in the grey iron material from which the discs are made. However, these alloy elements, e.g. molybdenum, are expensive, resulting in the high total cost of known brake discs. EP1646732 B1 refers to a brake disc alloyed with, inter alia, molybdenum.

An object of the present invention is to indicate a cost-effective grey iron alloy suitable for making brake discs. A further object of the present invention is to indicate a cost-effective brake disc.

US 5,894,010 A discloses an alloy for a grey cast iron plate for casting blanks of brake discs having a composition comprising 3.65-3.95 % C, 0.20-0.40 % Cr, 1.80-2.20 % Si, 0.60-0.80 % Mn, 0.30-0.50 % Cu, 0.20-0.80 % Nb and iron.

CN 101418413 A discloses a niobium alloy cast iron braking disc. The alloy comprises 3.7-3.9 % C, 1.8-2.2 % Si, 0.5-0.8 % Mn, ≤0.08 % S, ≤0.60 % Cu, ≤0.20 % Ni, ≤0.05 % V, ≤0.05 % Sn, ≤0.05 % Ti, ≤0.25 % Cr-Mo, 0.08-0.3 % Nb and the balance Fe.

SUMMARY OF THE INVENTION

According to the invention, this object is achieved by a grey iron alloy which contains (in wt%):

| | |
|---|---|
| C: | ≤ 4.2 % |
| Si: | 1 - <1.30 % |
| Mn: | 0.4 - 0.8 % |
| Nb: | 0.05 - 0.4 % |
| Cr: | ≤ 0.4 % |
| Cu: | ≤ 0.7 % |
| V + Ti + Mo: | ≤0.4 % |
| P: | <0.05 % |
| S: | <0.1 % |

the remainder consisting of Fe and naturally occurring impurities, and the degree of saturation Sc, expressed as

$$\%C/(4.26 - 0.317*(\%Si) + 0.027(\%Mn) - 0.3(\%P))$$

is greater than 1.

The carefully balanced contents of alloy substances result in a grey iron alloy which has very good high-temperature characteristics and wear resistance. This makes the grey iron alloy very suitable as material for brake discs, particularly for heavy vehicles such as trucks.

A brake disc containing the grey iron alloy according to the invention has good resistance to thermomechanical fatigue and good wear resistance. It can also be made at low cost, since the grey iron alloy of which the disc consists comprises mainly alloy substances which are available at relatively low cost.

The carbon content of the grey iron alloy is preferably 3.9 - 4.1 %.

The silicon content of the grey iron alloy is preferably 1 - 1.25%.

The manganese content of the grey iron alloy is preferably 0.5 - 0.7%.

The niobium content of the grey iron alloy is preferably 0.1 - 0.4%.

More preferably, the niobium content of the grey iron alloy is 0.15 - 0.35%.

The chrome content of the grey iron alloy is preferably not more than 0.2%.

The copper content of the grey iron alloy is preferably 0.4 - 0.6%.

According to an alternative, the grey iron alloy has a vanadium content of $\leq 0.2\%$.

According to an alternative, the grey iron alloy has a titanium content of $\leq 0.05\%$.

According to an alternative, the grey iron alloy has a molybdenum content of $\leq 0.3\%$.

The sulphur content is preferably below 0.08%.

The phosphorus content is preferably below 0.025%.

The invention relates also to a brake disc which contains the grey iron alloy as indicated above.

DESCRIPTION OF THE INVENTION

A cast product, e.g. a brake disc made of the grey iron alloy according to the invention, has a main structure of lamellar graphite in a perlitic matrix. The lamellar graphite structure gives the cast product good heat conduction and the perlitic matrix ensures good strength and wear resistance.

The following alloy substances are incorporated in the grey iron alloy according to the invention:

Carbon (C)

The carbon content of the grey iron alloy influences the proportion of lamellar graphite which precipitates when the alloy solidifies. It is therefore important that the carbon content of the grey iron alloy according to the invention is high, since a brake disc made of it will then have a high proportion of lamellar graphite resulting in high thermal conductivity and consequently less thermally induced stresses. However, too high carbon content causes primary precipitation of graphite and consequent flotation leading to nonhomogeneous structure in the grey iron and inferior characteristics. The carbon content of the alloy according to the invention should therefore be not more than 4.2 wt%. It should preferably be between 3.9 and 4.1 wt% to ensure high and uniform thermal conductivity.

Silicon (Si)

Silicon is incorporated in the grey iron alloy to improve its castability and prevent white solidification. To ensure this, the silicon content needs to be not less than 1 wt%. However, silicon promotes disintegration of the alloy's perlitic matrix, so high silicon contents reduce the stability of the alloy, particularly at high temperatures. The silicon content has therefore to be limited to below 1.30 wt%. It should preferably be between 1 and 1.25 wt% to ensure a perlitic matrix in the grey iron alloy.

Phosphorus (P)

Phosphorus is an impurity in grey iron which may result in brittle phosphorus inclusions in the solidified alloy. It has therefore to be limited to below 0.05 wt%, preferably below 0.025 wt%.

Sulphur (S)

Sulphur is an impurity in grey iron which may give rise to sulphides. It has therefore to be limited to below 0.1 wt%, preferably below 0.08 wt%.

Manganese (Mn)

Manganese is added to bind sulphur and thereby improve the machinability of grey iron. It also stabilises the perlite phase. However, too high manganese content increases the risk of the formation of carbides which would make the finished product more difficult to machine. The manganese content and the ratio between manganese and sulphur also influence inter alia the nucleation and growth of graphite, so a narrow range is desirable with a view to achieving stable characteristics. For these reasons, the manganese content of the alloy according to the invention should be between 0.4 and 0.8 wt%, preferably between 0.5 and 0.7 wt%.

Niobium (Nb)

Niobium is an alloy substance available at relatively low cost which may wholly or partly replace the molybdenum conventionally used as alloy substance in grey iron alloys. It promotes the precipitation of graphite, with consequently positive effects on the alloy's thermal conductivity and hence on the thermomechanical characteristics. Niobium also reduces the interlamellar spacing in the perlitic phase which surrounds the alloy's graphite flakes, thereby favourably influencing the alloy's strength. It also stabilises the alloy in such a way that disintegration of the perlitic phase is counteracted. It also forms hard niobium carbides which increase the wear resistance. However, too high niobium content causes inferior machinability of the cast item. The amount of niobium should therefore be between 0.05 and 0.4 wt%, preferably between 0.1 and 0.4 wt% at more preferably between 0.15 and 0.35 wt%.

Chrome (Cr)

Chrome is an alloy substance often present in the initial material used for making the grey iron alloy. It has a positive effect on the grey iron alloy in being perlite-stabilising, but high chrome contents cause white solidification, so the chrome content should be not more than 0.4 wt%. It should preferably be between 0 and 0.2 wt%.

Copper (Cu)

Copper is an alloy substance which may form part of the initial material for the grey iron alloy. It has a stabilising effect on the perlite phase of grey iron, but this effect decreases when the matrix has become perlitic, so copper needs to be limited to not more than 0.7 wt%, preferably between 0.4 and 0.6 wt%.

Vanadium (V)

Vanadium forms hard vanadium carbide which improves the wear resistance of the grey iron alloy, but high vanadium contents increase the risk of white solidification and make the cast material more difficult to machine. The amount of vanadium in the material should therefore not exceed 0.2 wt%.

Titanium (Ti)

Titanium may be part of the initial material for the grey iron alloy and forms titanium carbides which are positive for the wear characteristics, but it makes machining the cast material more difficult. The titanium content should therefore be not more than 0.05 wt%.

Molybdenum (Mo)

Molybdenum has positive effects on the grey iron alloy's fatigue characteristics at high temperatures. In certain applications it may therefore be appropriate for the grey iron alloy to contain up to 0.3 wt% of molybdenum. However, molybdenum is an expensive alloy substance and low contents of it are therefore desirable in the grey iron alloy according to the invention. The molybdenum content of the grey iron alloy should therefore be between 0 and 0.3 wt%. In many applications, molybdenum may be entirely omitted from the grey iron alloy. In the grey iron alloy according to the invention the molybdenum content may therefore be 0 wt%.

Vanadium (V) + Titanium (Ti) + Molybdenum (Mo)

To balance its characteristics with regard to wear resistance and fatigue at high temperatures against its cost and machinability, the combined amount of vanadium, titanium and molybdenum in the grey iron alloy should not exceed 0.4 wt%.

Degree of saturation (Sc)

The grey iron alloy's degree of saturation Sc expressed as %C/(4.26 - 0.317*(%Si) + 0.027(%Mn) - 0.3(%P)) should be greater than 1.

The degree of saturation is the ratio between the total amount of carbon incorporated in the grey iron melt and the eutectic carbon content of the melt, which may be calculated on the basis of the Si, Mn and P contents as above. A ratio of less than 1 means that the amount of carbon in the melt is below eutectic (hypo eutectic), a ratio of 1 means that the amount of carbon incorporated in the melt is at eutectic and a ratio of more than 1 means that the amount of carbon incorporated in the melt is above eutectic (hyper eutectic). The ratio between carbon incorporated and eutectic carbon content is of great significance for the final structure of the solidified grey iron alloy. If the composition of the melt is hypo eutectic, the solidified melt will have high contents of austenite, with consequent adverse effects on the grey iron alloy's thermal conductivity. If the melt is hyper eutectic, the carbon incorporated in it will separate out in the form of graphite flakes during the solidification of the melt, giving the grey iron alloy a structure which is favourable for brake discs. If however the Sc value of the melt is too high, there is risk of primary precipitation of graphite and consequent graphite flotation.

As the grey iron alloy according to the invention has to be suitable for brake discs, it is important that a large amount of lamellar graphite is separated during the solidification of the melt, since the graphite flakes promote heat conduction in brake discs. The C, Si, Mn and P contents have therefore to be adapted so that the degree of saturation is greater than 1. The maximum upper Sc limit depends on the particular component for which the alloy is to be used. For the grey iron alloy according to the invention to be suitable for brake discs, Sc should be below 1.07.

The remainder of the grey iron alloy according to the invention consists of iron and possible unavoidable impurities. These impurities, also called naturally occurring impurities, may for example arise from the metal scrap used as initial material for the grey iron alloy or from the manufacturing methods employed.

DESCRIPTION OF DRAWING

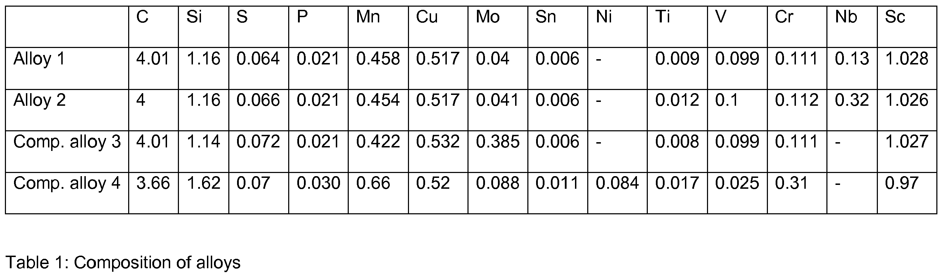

Figure 1: Table of composition of alloys according to the invention and comparable alloys.

EXAMPLES

The alloy according to the invention is described below on the basis of concrete examples.

As a first step, two alloys according to the invention were made, called "Alloy 1" and "Alloy 2". For comparison purposes, two alloys currently available on the market as material for brake discs were also made, called "Comp. alloy 3" and "Comp. alloy 4". Table 1 gives the compositions of the respective alloys 1 - 4. It shows that the alloys according to the invention contain small amounts of the unavoidable impurity tin.

"Comp. alloy 3" is used in brake discs which according to vehicle manufacturers have very long service lives. "Comp. alloy 4" is an alloy used in brake discs which according to vehicle manufacturers have a good service life.

The alloys were made in a conventional industrial way by methods appropriate to series production.

Brake discs were made from the alloys in a conventional way. Samples were taken from their friction surfaces.

Hardness was measured at room temperature in HBW10/3000 on samples taken from brake discs made from the grey iron alloys according to the invention. Alloy 1 had a hardness of 155 HBW10/3000 and alloy 2 a hardness of 169 HBW10/3000. On previous experience, the hardnesses measured show that the alloys according to the invention have good enough wear resistance to be suitable as material for brake discs.

Samples taken from the brake discs made from the alloys according to the invention and from those made from the comparable alloys were then tested for thermal conductivity.

The thermal conductivity of grey iron alloys is a very important measure of how well a brake disc made from them will withstand thermomechanical fatigue in operation. This is because the greater the heat conduction in the brake disc the more quickly and evenly the thermal energy which occurs in it during braking will be led away. This results in smaller stresses in the disc during braking and consequently less risk of crack formation in it.

The thermal conductivity of the respective alloys was measured in W/mK by the "laser flash" method at a number of temperatures in order to chart their thermal conductivity during a braking cycle. The thermal conductivity of the various alloys appears in Table 2.

Table 2: Thermal conductivity [W/mK]

| Temp. °C | Alloy 1 | Alloy 2 | Comp. alloy 3 | Comp. alloy 4 |
|---|---|---|---|---|
| 35 | 60.9 | 60.8 | 61.5 | 52.8 |
| 100 | 57.4 | 57.6 | 58.7 | 50.6 |
| 200 | 52 | 52.6 | 54.2 | 46.7 |
| 300 | 46.3 | 47.1 | 49.1 | 42.5 |
| 400 | 43.2 | 44.3 | 46.4 | 40.4 |
| 500 | 41.5 | 42.5 | 44.6 | 39.3 |
| 600 | 38.4 | 39.2 | 41.2 | 36.6 |

(continued)

| Temp. °C | Alloy 1 | Alloy 2 | Comp. alloy 3 | Comp. alloy 4 |
|----------|---------|---------|---------------|---------------|
| 700 | 29.9 | 30.7 | 32.6 | 28.7 |

Table 2 shows that the thermal conductivity of the alloys according to the invention at each temperature measured is significantly greater than that of comparable alloy 4 but similar to that of comparable alloy 3. In other words, the measured thermal conductivity of the alloys according to the invention compared with that of the comparable alloys therefore shows that the alloys according to the invention are very suitable for use in brake discs.

**Claims**

1. A grey iron alloy containing (in wt%):

|  |  |
|----|----|
| C: | $\leq$ 4.2 % |
| Si: | 1 - <1.30 % |
| Mn: | 0.4 - 0.8 % |
| Nb: | 0.05 - 0.4 % |
| Cr: | $\leq$ 0.4 % |
| Cu: | $\leq$ 0.7 % |
| V + Ti + Mo: | $\leq$ 0.4 % |
| P: | <0.05 % |
| S: | <0.1 % |

the remainder consisting of Fe and naturally occurring impurities, and the degree of saturation Sc, expressed as

$$\%C/(4.26 - 0.317*(\%Si) + 0.027(\%Mn) - 0.3(\%P)) > 1.$$

2. The grey iron alloy according to claim 1, with C content of 3.9 - 4.1 %.

3. The grey iron alloy according to claim 1 or 2, with Si content of 1 - 1.25 %.

4. The grey iron alloy according to any one of the forgoing claims, with Mn content of 0.5 - 0.7 %.

5. The grey iron alloy according to any one of the forgoing claims, with Nb content of 0.1 - 0.4 %.

6. The grey iron alloy according to any one of the forgoing claims, with Nb content of 0.15 - 0.35 %.

7. The grey iron alloy according to any one of the forgoing claims, with Cr content of 0 - 0.2 %.

8. The grey iron alloy according to any one of the forgoing claims, with Cu content of 0.4 - 0.6 %.

9. The grey iron alloy according to any one of the forgoing claims, with V content of $\leq$ 0.2 %.

10. The grey iron alloy according to any one of the forgoing claims, with Ti content of $\leq$ 0.05 %.

11. The grey iron alloy according to any one of the forgoing claims, with Mo content of $\leq$ 0.3 %.

12. The grey iron alloy according to any one of the forgoing claims, with S content of < 0.08 %.

13. The grey iron alloy according to any one of the forgoing claims, with P content of < 0.025 %.

14. A brake disc containing a grey iron alloy according to any one of claims 1-13.

**Patentansprüche**

1. Graugusslegierung, enthaltend (in Gew.-%):

| | |
|---|---|
| C: | ≤ 4,2% |
| Si: | 1 - < 1,30% |
| Mn: | 0,4 - 0,8% |
| Nb: | 0,05 - 0,4% |
| Cr: | ≤ 0,4% |
| Cu: | ≤ 0,7% |
| V + Ti + Mo: | ≤ 0,4% |
| P: | < 0,05% |
| S: | < 0,1% |

wobei der Rest besteht aus Fe und natürlich vorkommenden Verunreinigungen, und wobei der Sättigungsgrad Sc ausgedrückt ist als

$$\%C/(4{,}26 - 0{,}317*(\%Si) + 0{,}027(\%Mn) - 0{,}3(\%P)) > 1.$$

2. Graugusslegierung nach Anspruch 1, mit einem Gehalt an C von 3,9 - 4,1%.

3. Graugusslegierung nach Anspruch 1 oder 2, mit einem Gehalt von Si von 1 - 1,25%.

4. Graugusslegierung nach einem der vorhergehenden Ansprüche, mit einem Gehalt an Mn von 0,5 - 0,7%.

5. Graugusslegierung nach einem der vorhergehenden Ansprüche, mit einem Gehalt an Nb von 0,1 - 0,4%.

6. Graugusslegierung nach einem der vorhergehenden Ansprüche, mit einem Gehalt von Nb von 0,15 - 0,35%.

7. Graugusslegierung nach einem der vorhergehenden Ansprüche, mit einem Gehalt an Cr von 0 - 0,2%.

8. Graugusslegierung nach einem der vorhergehenden Ansprüche, mit einem Gehalt an Cu von 0,4 - 0,6%.

9. Graugusslegierung nach einem der vorhergehenden Ansprüche, mit einem Gehalt an V ≤ 0,2%.

10. Graugusslegierung nach einem der vorhergehenden Ansprüche, mit einem Gehalt an Ti ≤ 0,05%.

11. Graugusslegierung nach einem der vorhergehenden Ansprüche, mit einem Gehalt an Mo ≤ 0,3%.

12. Graugusslegierung nach einem der vorhergehenden Ansprüche, mit einem Gehalt an S < 0,08%.

13. Graugusslegierung nach einem der vorhergehenden Ansprüche, mit einem Gehalt an P < 0,025%.

14. Bremsscheibe enthaltend eine Graugusslegierung nach einem der Ansprüche 1 bis 13.

**Revendications**

1. Alliage de fonte grise contenant (% en poids) :

| | |
|---|---|
| C : | ≤ 4,2 % |
| Si : | 1 - <1,30 % |
| Mn : | 0,4 - 0,8 % |
| Nb: | 0,05 - 0,4 % |
| Cr : | ≤ 0,4 % |

(suite)

| Cu : | $\leq 0,7\ \%$ |
|---|---|
| V + Ti + Mo : | $\leq 0,4\ \%$ |
| P : | $< 0,05\ \%$ |
| S : | $< 0,1\ \%$ |

le reste constitué de Fe et d'impuretés naturelles, et le degré de saturation Sc, exprimé en

$$\%C/(4{,}26 - 0{,}317*(\%Si) + 0{,}027(\%Mn) - 0{,}3(\%P)) > 1.$$

2. Alliage de fonte griseselon la revendication 1, avec un contenu C de 3,9 - 4,1 %.

3. Alliage de fonte grise selon la revendication 1 ou 2, avec un contenu Si de 1 - 1,25 %.

4. Alliage de fonte grise selon l'une quelconque des revendications précédentes, avec un contenu Mn de 0,5 - 0,7 %.

5. Alliage de fonte grise selon l'une quelconque des revendications précédentes, avec un contenu Nb de 0,1 - 0,4 %.

6. Alliage de fonte grise selon l'une quelconque des revendications précédentes, avec un contenu Nb de 0,15 - 0,35 %.

7. Alliage de fonte grise selon l'une quelconque des revendications précédentes, avec un contenu Cr de 0 - 0,2 %.

8. Alliage de fonte grise selon l'une quelconque des revendications précédentes, avec un contenu Cu de 0,4 - 0,6 %.

9. Alliage de fonte grise selon l'une quelconque des revendications précédentes, avec un contenu $V \leq 0{,}2\ \%$.

10. Alliage de fonte grise selon l'une quelconque des revendications précédentes, avec un contenu $Ti \leq 0{,}05\ \%$.

11. Alliage de fonte grise selon l'une quelconque des revendications précédentes, avec un contenu $Mo \leq 0{,}3\ \%$.

12. Alliage de fonte grise selon l'une quelconque des revendications précédentes, avec un contenu S < 0,08 %.

13. Alliage de fonte grise selon l'une quelconque des revendications précédentes, avec un contenu P < 0,025 %.

14. Disque de frein contenant un alliage de fonte grise selon l'une quelconque des revendications 1-13.

| | C | Si | S | P | Mn | Cu | Mo | Sn | Ni | Ti | V | Cr | Nb | Sc |
|---|---|---|---|---|---|---|---|---|---|---|---|---|---|---|
| Alloy 1 | 4.01 | 1.16 | 0.064 | 0.021 | 0.458 | 0.517 | 0.04 | 0.006 | - | 0.009 | 0.099 | 0.111 | 0.13 | 1.028 |
| Alloy 2 | 4 | 1.16 | 0.066 | 0.021 | 0.454 | 0.517 | 0.041 | 0.006 | - | 0.012 | 0.1 | 0.112 | 0.32 | 1.026 |
| Comp. alloy 3 | 4.01 | 1.14 | 0.072 | 0.021 | 0.422 | 0.532 | 0.385 | 0.006 | - | 0.008 | 0.099 | 0.111 | - | 1.027 |
| Comp. alloy 4 | 3.66 | 1.62 | 0.07 | 0.030 | 0.66 | 0.52 | 0.088 | 0.011 | 0.084 | 0.017 | 0.025 | 0.31 | - | 0.97 |

Table 1: Composition of alloys

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1646732 B1
- US 5894010 A

- CN 101418413 A